# FASCICULE DE BREVET EUROPEEN

(11) **EP 0 347 303 B1**
(45) Date de publication et mention de la délivrance du brevet: **11.01.1995**
(21) Numéro de dépôt: 89401630.2
(22) Date de dépôt: 12.06.1989
(51) Int. Cl.: G01N 29/00

(54) **Procédé et dispositif de contrôle non destructif de pastilles crues au cours de la phase de pressage des poudres**
Verfahren und Vorrichtung zur zerstörungsfreien Prüfung von rauhen Tabletten während der Zusammenpressung von Pulvern
Method and apparatus for the non-destructive testing of crude pellets during a powder compressing stage

(30) Priorité: 15.06.1988 FR 8807999
(43) Date de publication de la demande: 20.12.1989
(73) Titulaire: COMMISSARIAT A L'ENERGIE ATOMIQUE, 75015 Paris Cédex 15 (FR)
(72) Inventeur: Weynant, Eric, F-84160 Cadenet (FR); Mercier, Claude, F-04100 Manosque (FR); Buffard, Laurent, F-69009 Lyon (FR); Fantozzi, Gilbert, F-69330 Mézieu (FR)
(74) Mandataire: Dubois-Chabert, Guy

(56) Documents cités:
- US-A- 3 924 456
- US-A- 4 004 456
- US-A- 4 107 981
- US-A- 4 207 771
- US-A- 4 344 326

## Description

L'invention concerne dans le domaine de la métallurgie des poudres, le contrôle des pastilles obtenues par compactage de ces poudres. Elle concerne plus particulièrement à la fois le procédé et le dispositif de contrôle non destructif au cours de la phase de pressage des poudres en pastilles à l'état cru.

Il existe des procédés et dispositifs de fabrication de pastilles qui peuvent être de très haute densité, telles que celles utilisées pour l'industrie nucléaire. Les pastilles de ce genre peuvent par exemple être en oxyde d'uranium, et avoir une densité élevée approchant la densité maximale théorique. Dans ce domaine, le contrôle non destructif des pastilles crues constitue un problème qui n'est résolu que de façon partielle. En effet, les méthodes couramment employées sont des examens visuels et géométriques de la pastille réalisée. Ainsi, on détecte des défauts extérieurs en observant les fissures débouchantes et la porosité ouverte. On peut également contrôler des dimensions après la phase de pressage. Ces différents contrôles sont réalisés sur la pastille crue. Cela nécessite donc une durée supplémentaire de contrôle, qui est pénalisante dans le cycle de fabrication.

De plus, ces méthodes ne permettent pas de détecter des défauts internes. Actuellement, la détection de ces derniers ne se fait que par une méthode ultrasonore, appliquée au produit fini, c'est-à-dire après les étapes de pressage des poudres et de frittage des pastilles. Là encore, une durée supplémentaire accroît le temps et le coût de fabrication.

Le but de l'invention est d'éviter les inconvénients précités, et de contrôler les pastilles crues, avant la fin de la fabrication, et en particulier pendant la phase de pressage des poudres de ces pastilles.

Or, par le brevet US-A-3 924 456, on connaît un procédé de contrôle non destructif consistant à placer un capteur d'ondes acoustiques sur une base en contact acoustique avec l'objet à étudier, cette base faisant office de guide d'ondes, de manière à détecter et à suivre en continu l'apparition et la propagation de défauts dans l'article. Mais ce procédé n'est pas appliqué à des poudres en cours de pressage, ce qui implique la présence d'une matrice fixe et de deux pistons pour effectuer le pressage.

D'autre part, on rappelle qu'un dispositif de pressage de telles poudres comprend principalement une matrice constituée elle-même d'un canon central à l'intérieur duquel la poudre est placée, ce canon étant entouré d'un bandage périphérique. La compression est obtenue à l'aide de deux pistons comprimant la poudre à l'intérieur de ces canons.

Le premier objet principal de l'invention est donc un procédé de contrôle non destructif au cours de la phase de pressage de poudres en trois étapes de compression, décompression et démoulage, donnant des pastilles crues. Il se fait au moyen d'un outillage composé d'une matrice fixe, formée d'un canon central dans lequel est introduite la poudre à compacter, et d'un bandage périphérique. Il est également composé d'un piston supérieur et d'un piston inférieur de compression ayant chacun un mouvement de translation l'un vers l'autre à l'intérieur du canon central pour compacter la poudre. L'invention se caractérise en ce que le procédé consiste à placer au moins un capteur d'ondes acoustiques sur le bandage périphérique de la matrice fixe, le canon central et le bandage périphérique de la matrice fixe étant en un matériau d'une dureté suffisante pour assurer alors la fonction de guide d'ondes, de manière à détecter et suivre en continu l'apparition et la propagation des défauts dans la pastille au cours des trois étapes.

Un tel procédé permet de détecter et de suivre en continu l'apparition et la propagation des défauts, à la fois externes et internes, de la pastille au cours de la phase de compactage. On peut donc connaître avec une grande précision l'état de la pastille à la fin de la phase de compactage. S'il y a des défauts, leur origine, à savoir la compression, la décompression ou le démoulage, et leur nature, en particulier des fissures, du feuilletage, ou du "end caping", peuvent être décelés.

Une réalisation principale de l'invention prévoit que le capteur d'ondes acoustiques est constitué d'un capteur piézoélectrique.

Un deuxième objet principal de l'invention est un dispositif de contrôle pour la mise en oeuvre du procédé qui vient d'être décrit. Il comprend principalement un capteur qui délivre un signal électrique, et une chaîne de traitement de ce signal en vue de son exploitation.

L'invention et ses caractéristiques seront mieux comprises à la lecture de la description qui suit, et qui est un exemple non limitatif de presse. Les figures en annexe représentent respectivement.
- figure 1, un premier mode de réalisation du dispositif selon l'invention, sans la chaîne de traitement du signal mesuré ;
- figure 2, un deuxième mode de réalisation du dispositif selon l'invention, sans la chaîne de traitement du signal mesuré ;
- figure 3, un schéma de ladite chaîne de traitement de signal mesuré, dans le dispositif selon l'invention.

Le procédé et le dispositif de contrôle selon l'invention seront décrits simultanément dans la description.

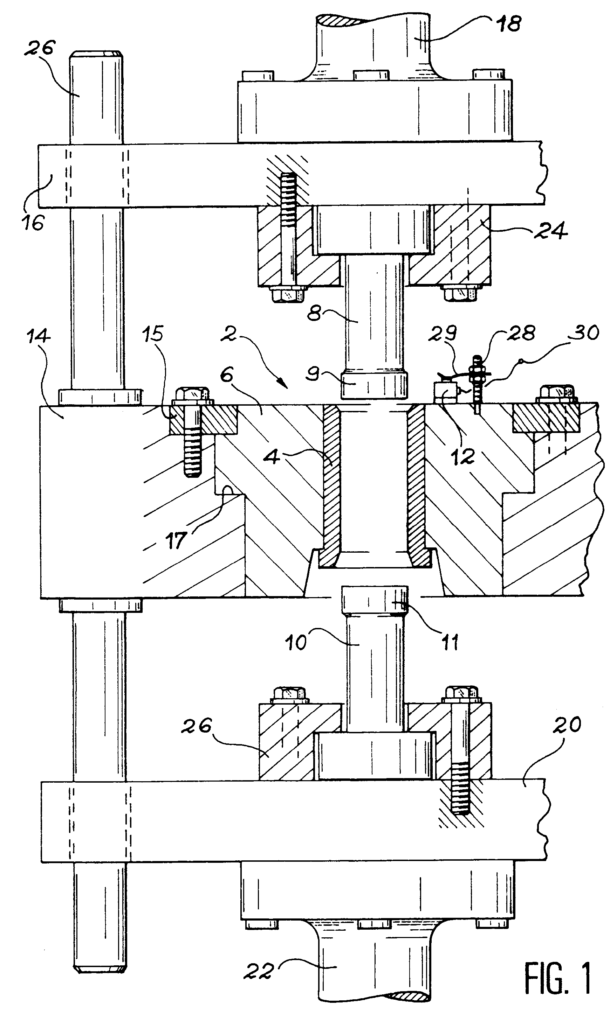

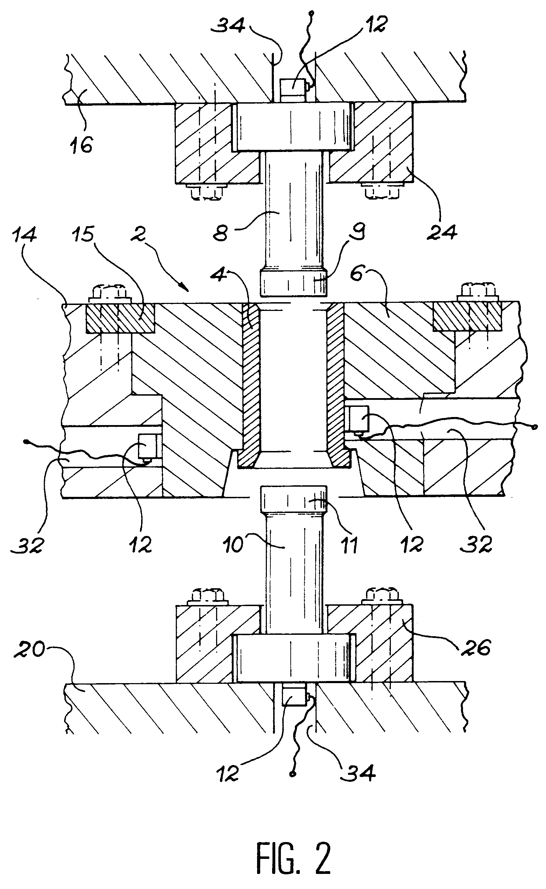

La fabrication de pastilles, notamment de très haute densité, obtenues par pressage de poudres, nécessite l'outillage suivant, représenté sur les figures 1 et 2. Il comprend trois éléments essentiels, qui sont une matrice fixe 2 et deux pistons 8 et 10 pour comprimer la poudre. La matrice 2 est formée d'un canon central 4, dont le diamètre intérieur correspond au diamètre des pastilles à obtenir, et dans lequel on place une quantité déterminée de poudre correspondant à une pastille. La matrice 2 est également constituée d'un bandage périphérique 6, entourant et maintenant le canon central 4. La matrice 2 est maintenue fixe sur une table 14 grâce à un système de fixation qui peut être une première bride annulaire 15, qui serre la matrice 2 contre un épaulement 17 de la table fixe 14.

Le piston supérieur 8 est fixé, au moyen d'une deuxième bride annulaire 24, sur une table supérieure 16. Cette dernière est montée mobile en translation par rapport à la table fixe 14. Cette translation est un glissement de la table supérieure 16 sur plusieurs colonnes de guidage 26, solidaires de la table fixe 14. Le mouvement de translation est obtenu par un vérin, dont le pied 18 de la tige est fixé à la partie supérieure de la table supérieure 16.

De manière analogue, une table inférieure 20 est mobile par rapport à la table fixe 14, au moyen des mêmes colonnes de guidage 26. Cette table inférieure 20 supporte un piston inférieur 10, fixé au moyen d'une troisième bride annulaire 26. Le même type de mouvement de translation est obtenu grâce à un deuxième vérin dont le pied 22 de la tige est fixé à la partie inférieure de la table inférieure 20.

Les deux pistons 8 et 10 sont positionnés de manière à pouvoir pénétrer à l'intérieur du canon central 4, lorsque la table supérieure 16 descend et lorsque la table inférieure 20 monte.

Pour obtenir la compression de la poudre placée à l'intérieur du canon central 4, le mouvement de descente du piston supérieur 8 doit correspondre au mouvement de montée du piston inférieur 10. Ces deux mouvements se poursuivent jusqu'à ce que la distance séparant ces deux pistons soit égale à l'épaisseur de la pastille à obtenir. Les deux pistons 8 et 10 ont chacun une partie active respective 9 et 11, dont les diamètres sont égaux aux diamètres intérieurs du canon central 4.

Le procédé de contrôle selon l'invention utilise la mesure acoustique, pendant la fabrication des pastilles. Dans ce but, au moins un capteur 12 est fixé de manière très rigide, sur la matrice 2. Celle-ci est en un matériau d'une dureté suffisante pour remplir la fonction de guide d'ondes sonores. De la sorte, lors des trois opérations de compactage, les ondes acoustiques, dues à ces trois opérations, sont transmises à travers l'ensemble de la matrice fixe 2, grâce à la très haute dureté du matériau qui la constitue. Celui-ci peut être en l'occurrence, de l'acier réfractaire, du carbure de tungstène, ou tout autre matériau équivalent du point de vue dureté. Le capteur 12 placé sur la matrice fixe 2 reçoit donc ces ondes acoustiques.

Le capteur 12 transmet son signal au moyen d'un câble 30 à une chaîne de traitement de ce signal mesuré. De façon préférentielle, ce capteur 12 est un capteur piézoélectrique. La chaîne de traitement sera décrite ultérieurement.

En référence à la figure 2, d'autres possibilités de positionnement du ou des capteurs 12 sont envisagées. Il peut s'avérer plus efficace de placer le capteur 12 directement en contact avec le canon central 4. Dans ce but, on peut ménager des trous 32 traversant le bandage périphérique 6, pour permettre aux câbles 30 de connecter les capteurs 12 à la chaîne de traitement du signal.

Il est aussi envisagé de placer le ou les capteurs 12 de façon très rigide sur un ou les deux pistons 8 ou 10, ou sur des pièces liées à ces pistons de manière très rigide. Dans ce cas, des orifices 34 sont prévus à l'intérieur des tables supérieure 16 et inférieure 20.

Plusieurs combinaisons de placement de ces capteurs sont donc possibles selon le nombre de capteurs que l'on désire installer.

Des moyens d'appui 28 sont prévus pour maintenir les capteurs en contact permanent avec l'outillage. Ils peuvent être constitués d'un ressort à lame 29, dont l'extrémité libre applique le capteur 12 sur l'outillage.

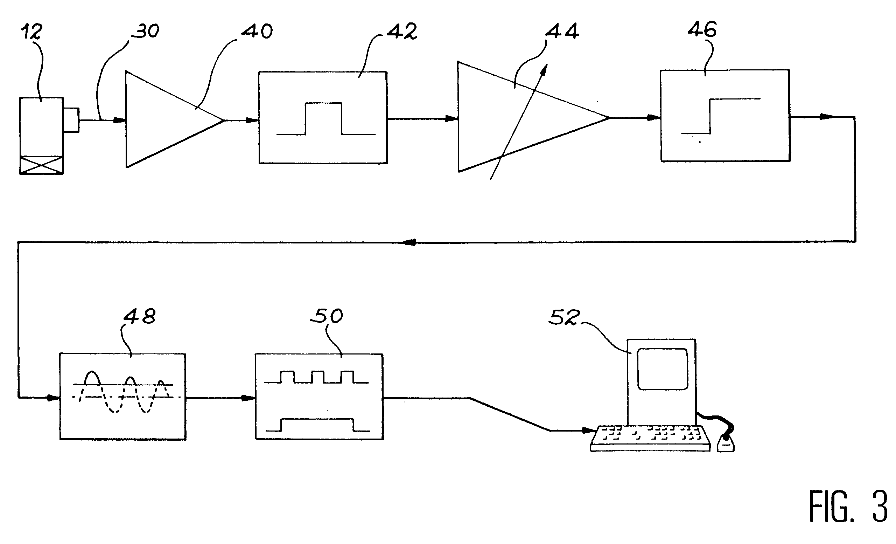

En référence à la figure 3, la chaîne de traitement des signaux mesurés peut comprendre les éléments suivants.

Un préamplificateur de gain 40 peut être utilisé, pour recevoir le signal mesuré, par l'intermédiaire du câble 30. Il peut être associé à un filtre 42, dont la bande passante correspond à celle du capteur 12, en l'occurrence un capteur piézoélectrique. Un amplificateur à gain variable 44 peut ensuite être utilisé, en association avec un filtre 46, pour éliminer des fréquences élevées constituant le bruit électronique d'origine thermique. L'exploitation des résultats ainsi fournie, se fait à l'aide d'un discriminateur 48 complétant cette chaîne et d'un compteur d'arches ou d'évènements 50. La chaîne se termine par un système d'acquisition 52 qui peut être du type enregistreur-papier et/ou informatique, en l'occurrence un microordinateur. A l'aide d'un système d'acquisition 52 du type informatique, il est possible de travailler en temps réel, ce qui permet de connaître, pendant le pressage le cycle de comptage donnant la qualité de la pastille crue réalisée. Il permet également de travailler en temps décalé, où la totalité des informations recueillies sont traitées et analysées, afin d'identifier les différents mécanismes responsables des défauts, au cours de chaque étape de la phase de compactage des poudres. Les différents paramètres mesurables, à l'aide de cette chaîne de traitement du signal mesuré, sont le nombre des évènements, le nombre total d'impulsions au cours d'un évènement, la durée de l'évènement, le taux de comptage par unité de temps, l'amplitude des évènements, et la valeur efficace de l'amplitude.

Ce contrôle permet le classement immédiat des pastilles crues en pastilles conformes et en non conformes ; il permet également d'effectuer immédiatement les modifications éventuelles des paramètres du pressage ou des poudres afin d'obtenir la qualité requise.

Le procédé et le dispositif de contrôle selon l'invention permettent de détecter et de suivre en continu l'apparition et la propagation des défauts sur les pastilles crues. Ces défauts détectés peuvent être à la fois externes et internes, et se produire pendant les trois étapes suivantes du compactage, qui sont la compression, la décompression et le démoulage. L'état de la pastille crue ainsi fabriquée peut donc être connu avec une grande précision après le pressage. Les défauts peuvent ainsi être analysés, et en particulier leur origine et leur nature. On pense en particulier à l'apparition de fissures de feuilletage et du phénomène appelé en langue anglosaxonne "end caping",, correspondant à la formation d'une croûte sur la surface de la pastille. Il a également été remarqué, lors des essais, que le mode d'élaboration des poudres obtenues par voie humide ou voie sèche est identifié grâce à l'émission acoustique.

Il est à noter que l'invention n'est pas limitée à l'industrie nucléaire, mais s'applique également à d'autres domaines hors du nucléaire, comme par exemple, la fabrication de comprimés dans le domaine pharmaceutique.

Il est à noter que ce procédé de contrôle peut s'appliquer unitairement à toutes les pastilles crues d'une fabrication ou statistiquement à certaines pastilles d'un lot.

## Revendications

1. Procédé de contrôle non destructif au cours de la phase de pressage de poudres, en trois étapes de compression, décompression et démoulage, au moyen d'un outillage composé d'une matrice fixe (2) formée d'un canon central (4), dans lequel est introduite la poudre à compacter, et d'un bandage périphérique (6), l'outillage étant également composé d'un piston supérieur (8) et d'un piston inférieur (10), ayant chacun un mouvement de translation l'un vers l'autre à l'intérieur du canon central (6) pour compacter la poudre, le procédé étant caractérisé en ce qu'il consiste à placer au moins un capteur d'ondes acoustiques (12) sur le bandage périphérique (6) de la matrice fixe (2) ou sur un ou les deux pistons 8 ou 10, ou sur des pièces liées à ces pistons de manière très rigide, le canon central (4) et le bandage périphérique (6) ou l'un des pistons (8,10) sur lequel le capteur d'ondes acoustiques (12) est placé, étant en un matériau d'une dureté suffisante pour remplir la fonction de guide d'ondes, de manière à détecter et suivre en continu l'apparition et la propagation des défauts dans la pastille, au cours des trois étapes du compactage.

2. Procédé selon la revendication 1, caractérisé en ce que le capteur (12) est un capteur piézoélectrique.

3. Dispositif de contrôle pour la mise en oeuvre du procédé selon l'une quelconque des revendications précédentes comprenant l'outillage selon la revendication 1, caractérisé en ce qu'il comprend une chaîne de traitement dudit signal délivré par le ou les capteur(s) (12).

## Patentansprüche

1. Verfahren zur zerstörungsfreien Prüfung während der Preßphase von Pulvern in drei Schritten, der Kompression, der Dekompression und des Ausformens, mittels einer Werkzeuggarnitur, zusammengesetzt aus einer festen Matrize (2), gebildet aus einer zentralen Buchse (4), in die das zu komprimierende Pulver eingeführt wird, und aus einem peripheren Verstärkungskranz (6), wobei das Werkzeug sich ebenfalls zusammensetzt aus einem oberen Kolben (8) und einem unteren Kolben (10), von denen jeder im Innern der zentralen Buchse eine Längsbewegung in Richtung des anderen ausführt, um das Pulver zu verdichten, wobei das Verfahren **dadurch gekennzeichnet** ist, daß es darin besteht, wenigstens einen Schallwellensensor (12) auf dem peripheren Verstärkungskranz (6) der festen Matrize (2) oder auf einem oder den beiden Kolben (8) oder (10) anzubringen, oder auf den mit diesen Kolben sehr starr verbundenen Teilen, wobei die zentrale Buchse (4) und die periphere Verstärkung (6) oder einer der Kolben (8,10), auf denen der Schallwellensensor (12) angebracht ist, aus einem Material besteht, dessen Härte ausreicht, um die Funktion des Wellenleiters zu erfüllen, um das Auftreten und die Fortpflanzung von Fehlern in den Tabletten im Laufe der drei Verdichtungsschritte festzustellen und zu verfolgen.

2. Verfahren nach Anspruch 1, dadurch gekennzeichet, daß der Sensor (12) ein piezoelektrischer Sensor ist.

3. Prüfvorrichtung für die Anwendung des Verfahrens nach einem der vorhergehenden Ansprüche mit der Werkzeuggarnitur nach Anspruch 1, dadurch gekennzeichnet, daß sie eine Verarbeitungskette für das genannte, durch den Sensor oder die Sensoren (12) gelieferte Signal umfaßt.

## Claims

1. Method of non-destructive monitoring in the course of the pressing phase of powders, in three stages of compression, decompression, and removal from the mould, by means of an apparatus composed of a fixed mould (2) formed by a central barrel (4) into which the powder to be compacted is introduced and a peripheral casing (6), the apparatus also being composed of an upper plunger (8) and a lower plunger (10), each having a translational movement towards one another inside the central barrel (6) in order to compact the powder, the method being characterized in that it consists in placing at least one sound-wave sensor (12) on the peripheral casing (6) of the fixed mould (2) or on one or both plungers (8) or (10), or on parts connected to these plungers in a very rigid manner, the central barrel (4) and the peripheral casing (6) or one of the plungers (8, 10) on which the sound-wave sensor (12) is placed being made of a material of a sufficient hardness to fulfil the function of a waveguide in order to detect and continuously trace the appearance and propagation of faults in the pellet in the course of the three stages of compacting.

2. Method according to Claim 1, characterized in that the sensor (12) is a piezoelectric sensor.

3. Monitoring device for implementing the method according to either of the preceding claims, comprising the apparatus according to Claim 1, characterized in that it comprises a string for processing the said signal delivered by the sensor or sensors (12).
